# EUROPEAN PATENT SPECIFICATION

(11) **EP 1 544 723 B1**
(45) Date of publication and mention of the grant of the patent: **30.04.2014**
(21) Application number: 04257862.5
(22) Date of filing: 16.12.2004
(51) Int. Cl.: G06F 3/12, H04L 29/06

(54) **Method and apparatus for communicating with network devices supporting different protocols**
Verfahren und Vorrichtung zur Kommunikation mit verschiedene Protokolle unterstützenden Netzwerkgeräten
Appareil et procédé pour la communication avec des dispositifs de réseau utilisants des protocoles differents

(30) Priority: 16.12.2003 JP 2003417959; 15.11.2004 JP 2004330941
(43) Date of publication of application: 22.06.2005
(73) Proprietor: Ricoh Company, Ltd., Tokyo 143-8555 (JP)
(72) Inventor: Tsutomu, Yuki, Tokyo (JP)
(74) Representative: Mounteney, Simon James

(56) References cited:
- EP-A- 1 357 700
- EP-A- 1 367 767
- WO-A-01/63848
- US-A1- 2002 133 581
- US-A1- 2002 178 126
- US-B1- 6 369 909

## Description

### BACKGROUND OF THE INVENTION

### 1. Field of the Invention

The present invention generally relates to communication techniques and, more particularly, to a communication apparatus which communicates with other apparatuses and a communication control method and program for controlling a communication apparatus and a recording medium storing the communication control program.

### 2. Description of the Related Art

Equipments such as a printer, a facsimile and a copy machine in recent years are capable of being connected directly to a network. Among such equipments, there are equipments that are capable of providing various kinds of information such as status information or attribute information of the equipment through the network.

However, since there is a case where protocols supported by the equipments differ from equipment to equipment, an application that acquires information from a plurality of equipments must perform communication with each of the equipments according to a protocol corresponding to the respective equipments.

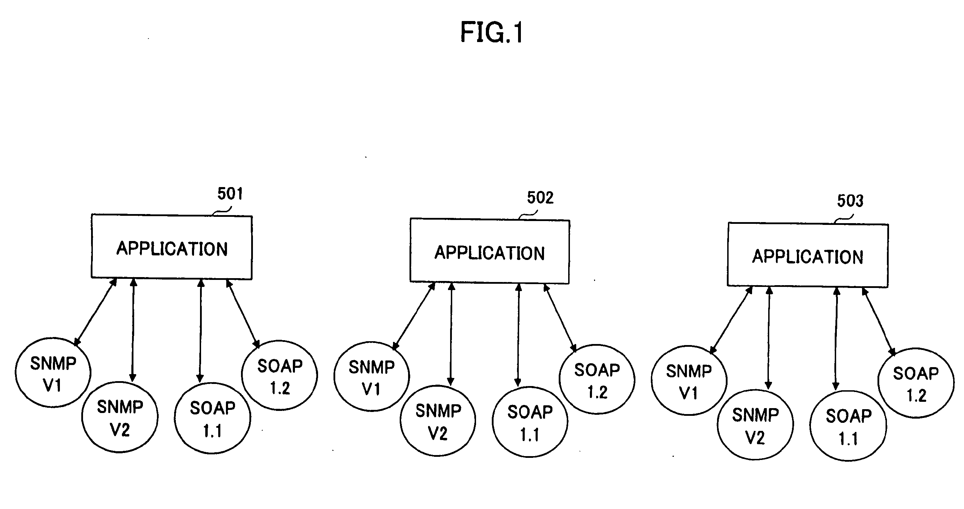

FIG. 1 is an illustration showing a conventional relationship between an application and protocols. In FIG. 1, applications 501, 502 and 503 are separate applications, each of which has a different source code. Each of the applications 501, 502 and 503 has a function to acquire information from equipments. FIG. 1 conceptually illustrates that SNMPv1, SNMPv2, SOAP1.1 and SOAP1.2 are mounted to each of the applications 501, 502 and 503, that is, mounting for calling API corresponding to each protocol is made. Namely, according to the conventional technique, a process depending on each protocol is mounted on an individual application basis.

However, in the form shown in FIG. 1, if it is required to correspond to a new protocol on the application side such as a case in which a new equipment is added to a network or a case in which a version of a protocol of an existing equipment is upgraded, a work for adapting to the new protocol, that is, a work such as a correction of a source code, compiling and linking must be needed.

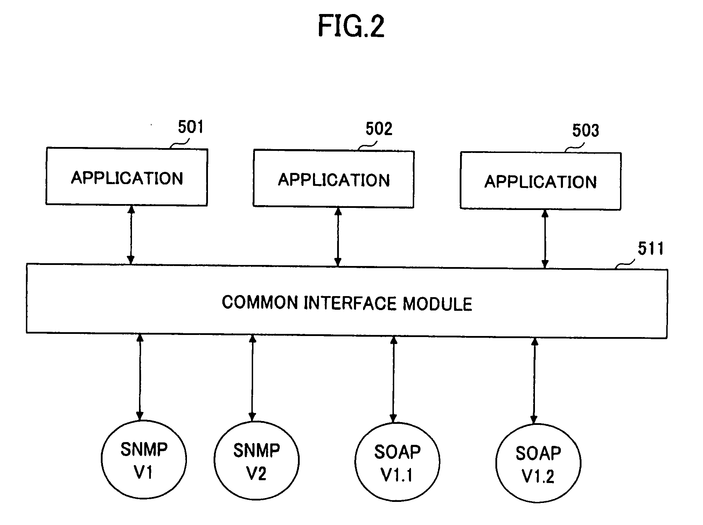

Generally, as a method of avoiding such an inconvenience, it is considered to adopt a structure such as shown in FIG. 2. FIG. 2 is an illustration showing an example in which a layer providing an interface common to a plurality of applications is provided.

In FIG. 2, a common interface module 511 absorbs processes depending on each protocol, and provides a function interface, which is made by abstracting or commonizing a plurality of application program interfaces (APIs) that differ from protocol to protocol, to each of the applications 501, 502 and 503. Therefore, each of the applications 501, 502 and 503 is capable of acquire information from equipments by calling the function interface provided by the common interface module 511 without being aware of a difference in protocols.

It should be noted that the Japanese Laid-Open Patent Application NO. 2000-76033 discloses a technique to acquire information from each of a plurality of equipments using a protocol different for each equipment.

However, even if the structure shown in FIG. 2 is adopted, in order to cope with a new protocol, a work for a correction of a source code and compiling and linking of the source code of the common interface module 511 is needed. Since only the common interface module 511 is corrected in the case of FIG. 2, a work load is reduced as compared to the case where a correction is needed for each application.
However, it is desirable to avoid carrying out the compiling and linking on an existing part as much as possible. This is because compiling, and linking may cause deterioration of a quality of an existing part, which requires a test work being applied again to the existing part.

EP 1 357 700 discloses an image forming apparatus in a network management environment. The apparatus manages a plurality of external apparatuses, while collecting information regarding each external apparatus through a network using a communication condition acquired through the network.

EP 1 367 767 discloses a method and apparatus for monitoring at least one network connected device using a controller. A system support database (SSD) is kept, the SSD storing information about the network connected devices.

WO 0163848 discloses a communications module for an appliance. It is disclosed that the module includes a communications protocol translator which translates signals received from a communications media into a appliance control signals and appliance control signals received from the appliance controller into a communications protocol of an appliance communications network. US-A-2002178126 discloses systems, client computing devices, server computing devices, and methods for accessing medical devices, providing remote access to medical devices and/or remotely accessing medical devices. In one exemplary embodiment, client computing devices utilize protocol components that may be obtained from a server computing device via a network to communicate with medical devices in a communications protocol supported by the medical device.

### SUMMARY OF THE INVENTION

It is a general object of the present invention to provide a communication apparatus in which the above-mentioned problems are eliminated.

A more specific object of the present invention is to provide a communication apparatus which can be easily adapted to perform communication according a new protocol.

In order to achieve the above-mentioned objects, there is provided according to one aspect of the present invention a communication apparatus as set out in Claim 1.

Preferred features of this aspect are set out in Claims 1 to 9.

According to the above-mentioned aspect of the invention, the communication apparatus is capable of acquiring a communication procedure that enables the communication apparatus to communicate with the equipment connected to the network according to a protocol supported by the communication apparatus even if the equipment does not correspond to the protocol supported by the communication apparatus. Thus, the communication apparatus is capable of easily performing communication according to a new protocol, which is not supported by the communication apparatus.

Additionally, there is provided according to another aspect of the present invention a communication control method as set out in Claim 10. Preferred features of this aspect are set out in Claims 11 to 18.

According to the above-mentioned aspect of the invention, the communication apparatus is capable of acquiring a communication procedure that enables the communication apparatus to communicate with the equipment connected to the network according to a protocol supported by the communication apparatus even if the equipment does not correspond to the protocol supported by the communication apparatus. Thus, the communication apparatus is capable of easily performing communication according to a new protocol, which is not supported by the communication apparatus.

Additionally, there is provided according to another aspect of the present invention a computer readable recording medium storing a program for causing a computer to perform a communication control method as set out in Claim 18.

Further, there is provided according to another aspect of the present invention a program for causing a computer to perform a communication control method as set out in Claim 20.

Other objects, features and advantages of the present invention will become **more** apparent from the following detailed description when read in conjunction with accompanying drawings.

### BRIEF DESCRIPTION OF THE DRAWINGS

FIG. 1 is an illustration showing a conventional relationship between an application and protocols;
FIG. 2 is an illustration showing an example in which a layer providing an interface common to a plurality of applications is provided;
FIG. 3 is a block diagram of an equipment management system according to an embodiment of the present invention;
FIG. 4 is a block diagram of a hardware structure of an equipment management server shown in FIG. 3;
FIG. 5 is a block diagram of a function of the equipment management server;
FIG. 6 is an illustration for explaining an interface specification of a common interface;
FIG. 7 is an illustration for explaining categories of equipment information;
FIG. 8 is an illustration for explaining contents of a protocol module management table;
FIG. 9 is an illustration for explaining information managed by a protocol control function name list file;
FIG. 10 is an illustration for explaining a source code by which a protocol module management part calls a protocol module control part;
FIG. 11 is an illustration of contents of access procedure information;
FIG. 12 is an illustration for explaining a management of a protocol module library in a library server;
FIG. 13 is an illustration for explaining contents of a package list table;
FIG. 14 is a sequence chart for explaining an acquisition process of acquiring equipment information from an image forming apparatus performed by an equipment management server;
FIG. 15 is an illustration for explaining contents of an updated protocol module management table; and
FIG. 16 is a block diagram of an equipment management system using an image forming apparatus as an equipment management server.

### DETAILED DESCRIPTION OF THE PREFERRED EMBODIMENT

A description will now be given, with reference to the drawings, of an embodiment of the present invention.

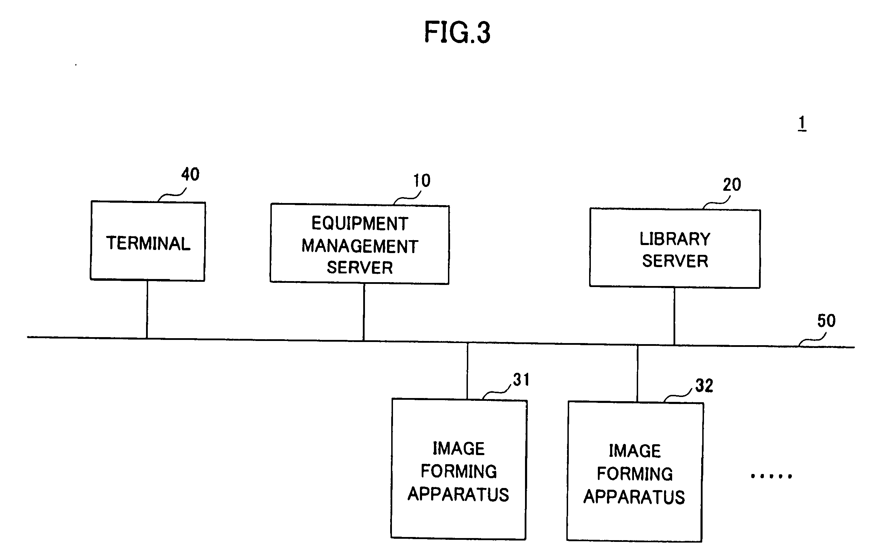

FIG. 3 is a block diagram of an equipment management system according to an embodiment of the present invention. As shown in FIG. 3, the equipment management system 1 according to the embodiment of the present invention comprises an equipment management server 10, a library server 20, one of more image forming apparatuses (image forming apparatuses 31 and 32) and a terminal 40, which are interconnected through a network such as a local area network (LAN) or the Internet. The network 50 may be a wired network or a wireless network.

The equipment management server 10 is implemented by a computer which mounts a function to acquire attribute information and status information of each of the image forming apparatuses, such as the image forming apparatus 31, in response to a request from the terminal 40 and provide the acquired information to the terminal 40.

The library server 20 is implemented by a computer, which manages a plurality of libraries (hereinafter, referred to as protocol module libraries) for communication with equipments according to specific protocols, respectively. For example, the library server 20 manages protocol module libraries for SNMPv1 (Simple Network Management Protocol v1), SNMPv2, SNMPv3, SOAP1.1 (Simple Object Access Protocol 1.1), SOAP1.2, etc. It should be noted that the protocol module libraries are provided by benders of an operation system (OS).

The image forming apparatus 31 is an example of the equipments, and is capable of providing equipment information in response to a request from the equipment management server 10 according to a predetermined protocol. The terminal 40 is a personal computer (PC), a personal digital (data) assistant (PDA) or a mobile phone. A client application for using a function of the equipment management server 10 is mounted to the terminal 40 so that a user can check information of each equipment by operating the client application.

A description will be given of the detail of the equipment management server 10.

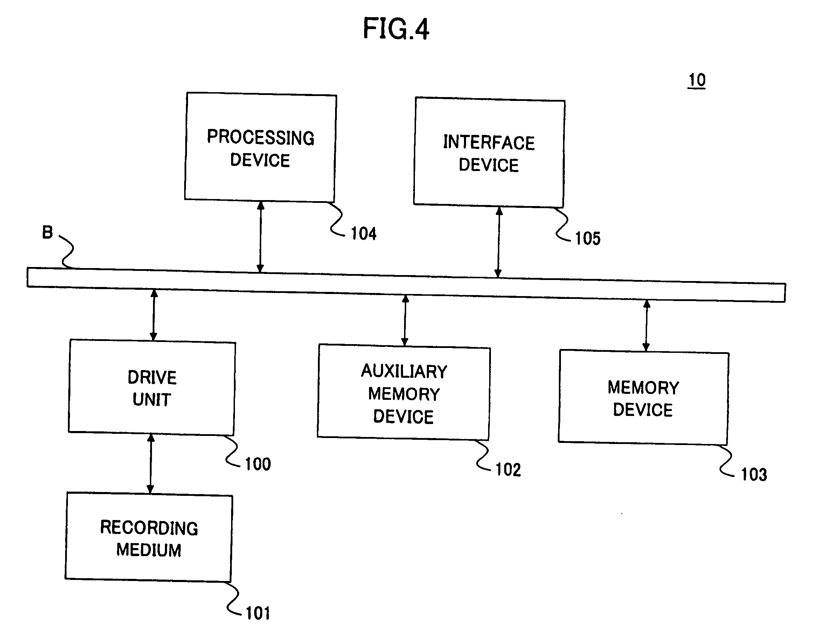

FIG. 4 is a block diagram of a hardware structure of the equipment management server according to the present embodiment. The equipment management server 10 of FIG. 4 comprises a drive unit 100, an auxiliary memory device 102, a memory device 103, a processing device 104 and an interface device, which are interconnected by a bus B. An equipment management program implementing a process of the equipment management server 10 is provided by a recording medium 101 such as a CD-ROM. When the recording medium 101, on which the instrument management program is recorded, is loaded to the drive unit 100, the equipment management program is read from the recording medium 101 by the drive unit 100 and installed in the auxiliary memory device 102 through the drive apparatus 100.

The auxiliary memory device 102 stores the thus-installed equipment control program and also stores necessary files and data.

The memory device 103 reads the equipment management program from the auxiliary memory device 102 when a start instruction of the equipment management program is given, and stores the read program therein. The processing device 104 performs functions, which relate to the equipment management server 10, according to the equipment control program stored in the memory device 103. The interface device 105 comprises, for example, a modem, a router or the like, and is used for connecting to the equipment management server 10 to the network 50 shown in FIG. 3.

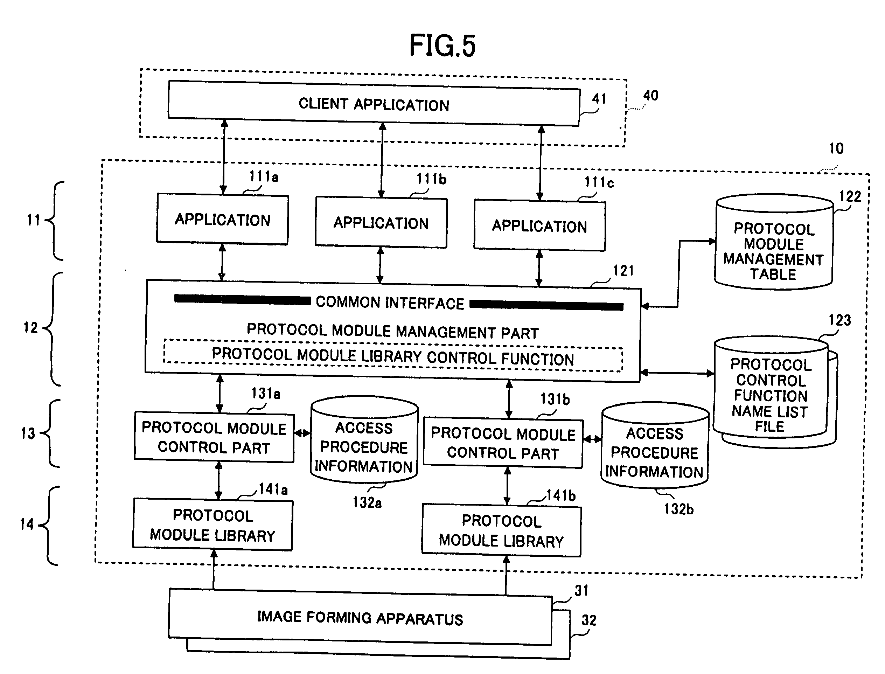

FIG. 5 is a block diagram of a function of the equipment management server. In FIG. 5, the function mounted in the equipment management server 10 can be divided into four layers, an application layer 11, a common interface layer 12, a control layer 13 and a protocol layer 14.

The application layer 11 is a layer in which various applications for offering various services to a client application 41 in the terminal 40 are mounted. In the present embodiment, applications 111a, 111b and 111c are mounted as applications for providing equipment information to the client application 41.

The common interface layer 12 is a layer for offering a function interface (hereinafter referred to as a common interface) to the application layer 11 so that each application of the application layer 11 can acquire equipment information without being aware of a protocol. The function interface is produced by abstracting or commonizing APIs which differs from protocol to protocol. In the present embodiment, a protocol module management part 121 serving as protocol module management means is mounted as a module for providing the common interface. The protocol module management part 121 plays a role of offering the common interface to the application layer 11 so as to offer a control function of a protocol module library for each protocol in the control layer 13 through the common interface. It should be noted that the single protocol module management part 121 is used commonly by each application in the application layer 11.

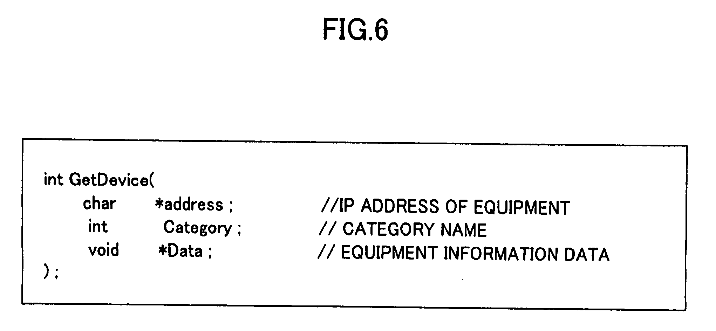

FIG. 6 is an illustration for explaining an interface specification of the common interface. As shown in FIG. 6, the interface name (function name) of the common interface is "GetDevice", and three arguments, "address", "Category" and "Data", are defined. The "address" is an argument for designating an IP address of an equipment from which equipment information is to be acquired. The "Category" is an argument for designating the name (category name) of the category of the equipment from which the equipment information is to be acquired. The "Data" is an argument for designating a pointer to a memory area where information returned from an equipment is stored. Each application can acquire the equipment information by calling the "GetDevice" function even if communication with the equipment is performed according to any protocol.

A description will now be given of categories of the equipment information.

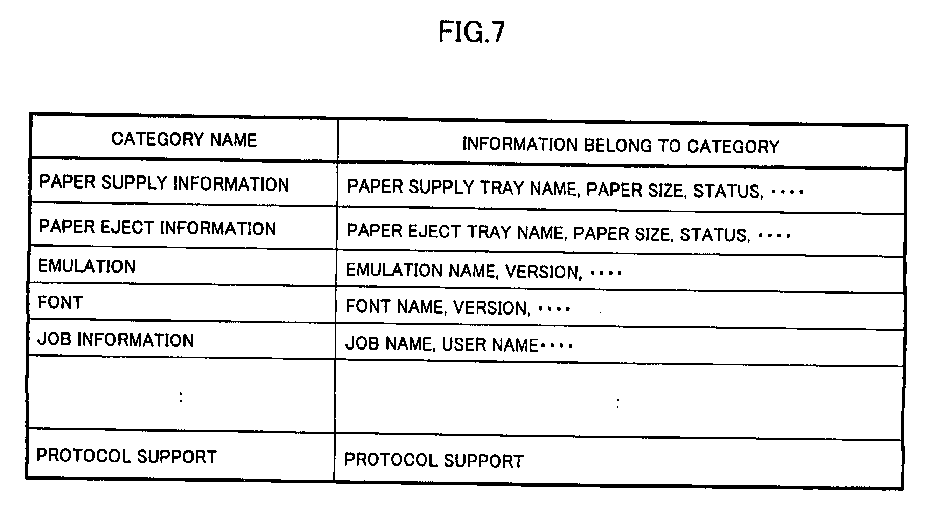

The equipment information can be classified into some categories as shown in FIG. 7. FIG. 7 is an illustration for explaining the categories of the equipment information. In FIG. 7, a category name of each category and information belonging to each category are shown according to a table format. It is appreciated from FIG. 7 that the categories of the equipment information contains, for example, information (paper supply information) regarding a paper supply tray, information (paper eject information) regarding paper eject tray, information (emulation) regarding a supported emulation, information (font) regarding supported font, information (job information) regarding jobs and information(protocol support) regarding existence of support for protocol. Additionally, it can be appreciated that the paper supply information contains a paper supply tray name, a paper size and a status.

Accordingly, if it is desired to obtain paper supply information, the "paper supply information" is designated as the Category argument of the "GetDevice" function so that information regarding the paper supply tray name, paper size and status is returned as a Data argument.

Returning to FIG. 5, the protocol layer 14 is a layer provided with API specific to the protocol used for communication with equipment, and a protocol module library specific to each protocol is mounted on an individual kind of protocol basis. In the present embodiment, a protocol module library 141a, which is a protocol module library for SNMPv1, and a protocol module library 141b, which is a protocol module library for SNMPv2, are already mounted. It should be noted that the protocol module libraries 141a, 141b, etc. may be collectively referred to as a "protocol module library 141".

The control layer 13 is a layer which plays a roll to intermediate between the protocol layer 14 and the common interface layer 12 so as to provide a dynamically loadable interface (an interface which can be loaded during execution even if it is not statically linked) to the common interface layer 12 by commonizing APIs that differ from protocol to protocol in the protocol layer 14. Each module in the control layer 13 is mounted in accordance with the protocol module library 141 in the protocol layer 14. In the present embodiment, a protocol module part 131a corresponding to the protocol module library 141a and a protocol module control 131b corresponding to the protocol module library 141b are mounted. It should be noted that the modules in the control layer 13 may be collectively referred to as a "protocol module control part 131".

A protocol module management table 122 and a protocol control function name list file 123 are tables and files that manage information necessary for the protocol module management part 121 to call the protocol module control part 131.

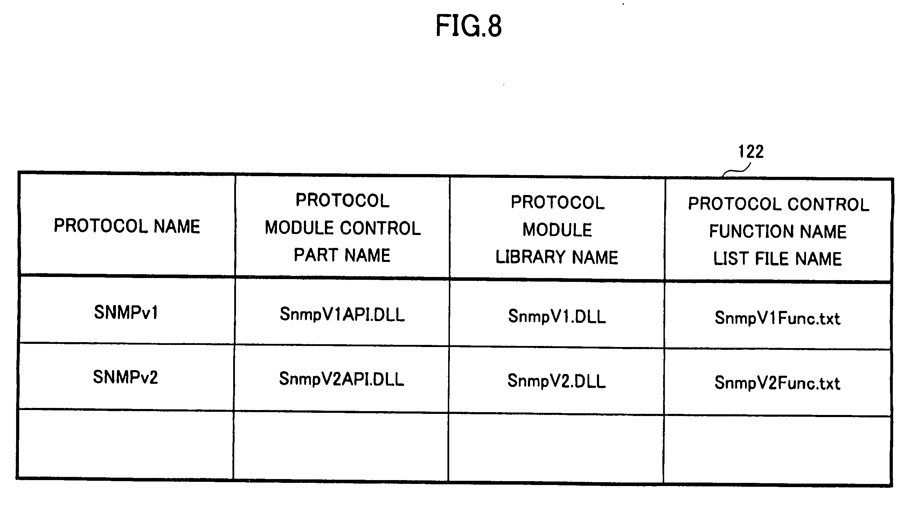

FIG. 8 is an illustration for explaining contents of the protocol module management table. As shown in FIG. 8, the protocol module management table 122 manages a protocol name, a protocol module control part name, a protocol module library name, a protocol control function name list file name, etc., for each kind of protocols which that equipment management server 10 is currently supporting.

The protocol name is a name of a protocol. The protocol module control part name is a file name (DLL name) of the protocol module control part 131. The protocol module library name is a file name (DLL name) of the protocol module library 141. The protocol control function name list file name is a file name of the protocol control function name list file 123 mentioned later.

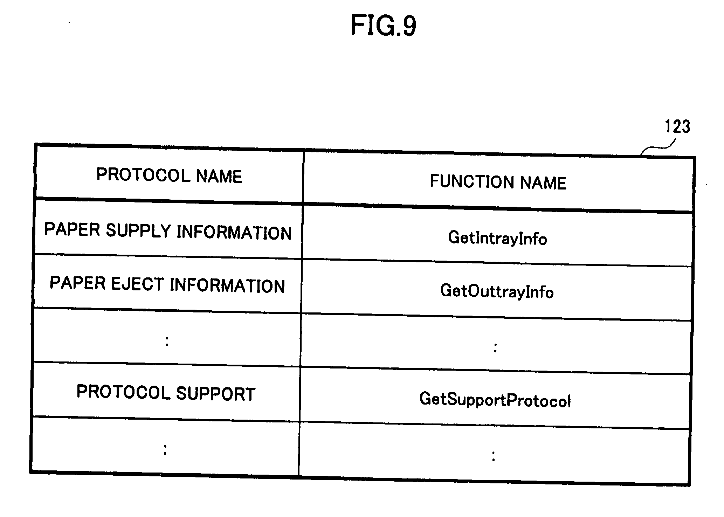

FIG. 9 is an illustration for explaining information managed by the protocol control function name list file. As shown in FIG. 9, the protocol control function name list file 123 manages the category name, the function name, etc, for each category of the equipment information. In should be noted that the protocol control function name list file 123 is defined for each protocol module control part 131. Accordingly, the function name with respect to each category can be differed for each protocol module control part 131. However, it is necessary to follow communalization with respect to a return value from of the function and argument information, and it is said that the interface of each protocol module control part 131 is communalized within that range.

A description will be given of how the protocol module management means 121 calls the protocol module control part 131 using the protocol module management table 122 and the protocol control function name list file 123.

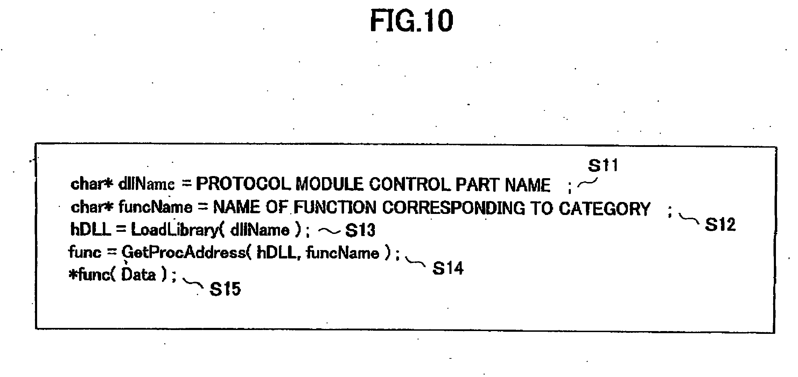

FIG. 10 is an illustration for explaining a source code by which the protocol module management part calls the protocol module control part. The source code shown in FIG. 10 is mounted as a part of a process in the "GetDevice" function of the protocol module management part 121.

The protocol module control part name of the protocol module control part 131 (hereinafter, referred to as a "current protocol module control part"), which is an object to be called, is read from the protocol module management table 122 (S11), and, further, the function name of the function (hereinafter, referred to as "current function") with respect to a category designated by the Category argument of the "GetDevice" function is acquired from the protocol control function name list file 123 corresponding to the current protocol module control part 131 (S12). The protocol module control part 131 is loaded (S13), and the address of the current function is acquired (S14), and thereafter the current function is called (S15). By calling the current function, the equipment information is stored in the Data argument of the "GetDevice" function, and, thereby, the caller of the "GetDevice" function, that is, the application 111a, etc., can acquire the equipment information.

As mentioned above, the calling of the protocol module control part 131 is not described statically in the source code of the protocol module management part 121, but the protocol module control part 131 can be dynamically called in accordance with the definition of the protocol module management table 122 and the protocol control function name list file 123. Therefore, the calling of the interface of each protocol module control part 131 can be performed according to the common procedure as shown in the figure.
Moreover, the protocol module control part 131, which is an object to be called, can be changed by merely changing the protocol module management table 122 without correcting the source code of the protocol management part 121.

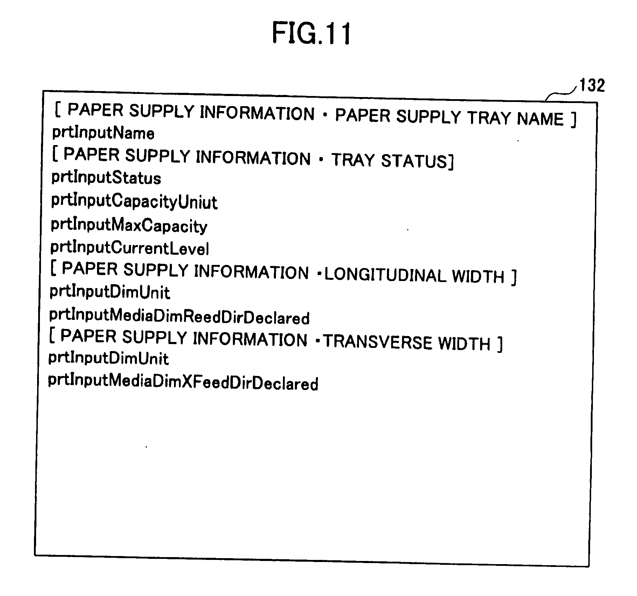

Returning to FIG. 5, access procedure information 132a and access procedure information 132b (hereinafter, collectively referred to as "access procedure information 132") is information in which information necessary for the protocol module control part to call the protocol module library 141 is defined. FIG. 11 is an illustration of contents of the access procedure information. As shown in FIG. 11, character strings for the protocol module library 141 to discriminate information belonging to each category of the equipment information are defined in the access control procedure information 132. For example, when acquiring a paper supply tray name belonging to the paper supply information, it can be appreciated that a' character string "prtInputName" should be designated as the argument of API of the protocol module library 141.

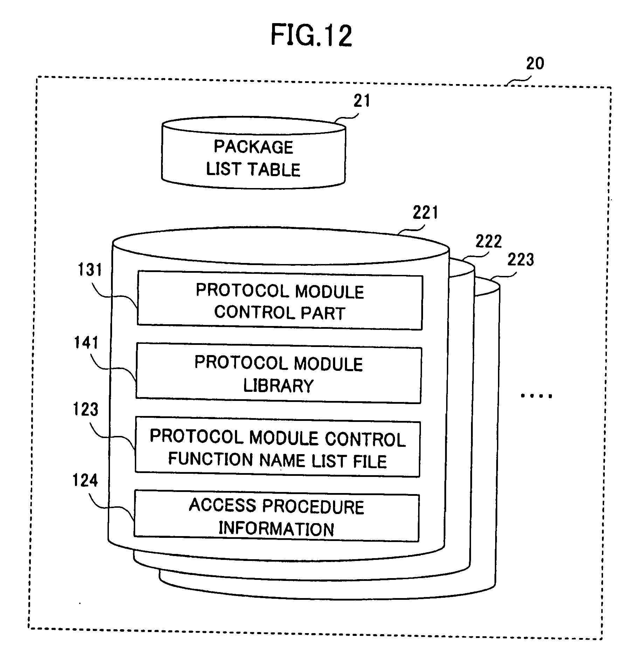

A description will now be given of the library server 20. FIG. 12 is an illustration for explaining a management of the protocol module library in the library server. As shown in FIG. 12, the library server 20 comprises a list table 21 and a plurality of protocol module packages 221, 222, 223, etc. Each of the protocol module packages contains the protocol module control part 131, the protocol module library 141, the protocol control function name list file 123 and the access procedure information 132 which together are provided into a single compressed file for each kind of protocols.

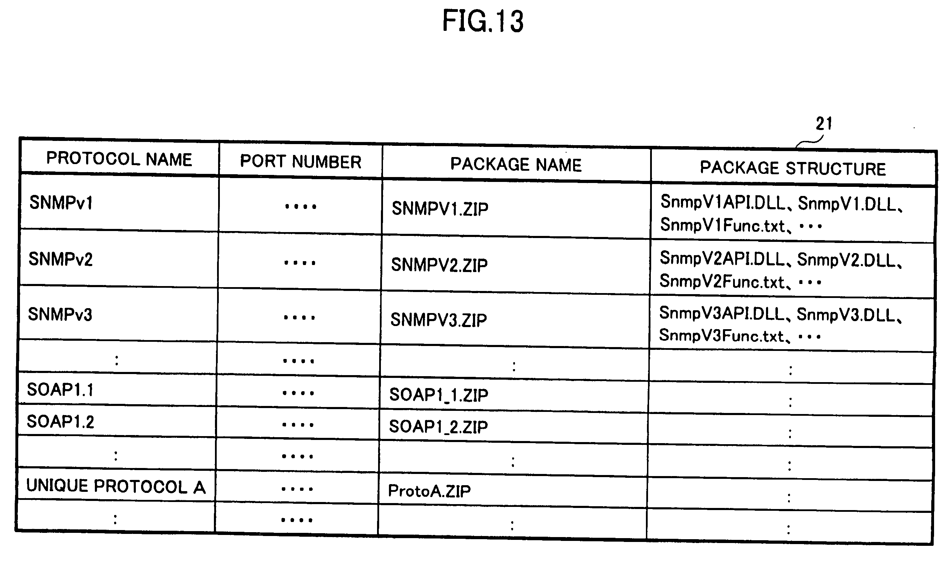

The package list table 21 is a table, which manages list information regarding the protocol module packages managed in the library server 20. FIG. 13 is an illustration for explaining contents of the package list table. As shown in FIG. 13, the package list table 21 manages a protocol name, a port number, a package name, a package structure, etc., with respect to each protocol package 221 managed in the library management server 20. The protocol name is a name of the protocol to which the protocol module package corresponds. The port number is a number of a port of the protocol concerned. The package name is a name (file name) of the protocol module package. The package structure is a set of names of the protocol module control part 131, the protocol module library 141, the protocol control function name list file 123 and the access procedure information 132 included in the protocol module package.

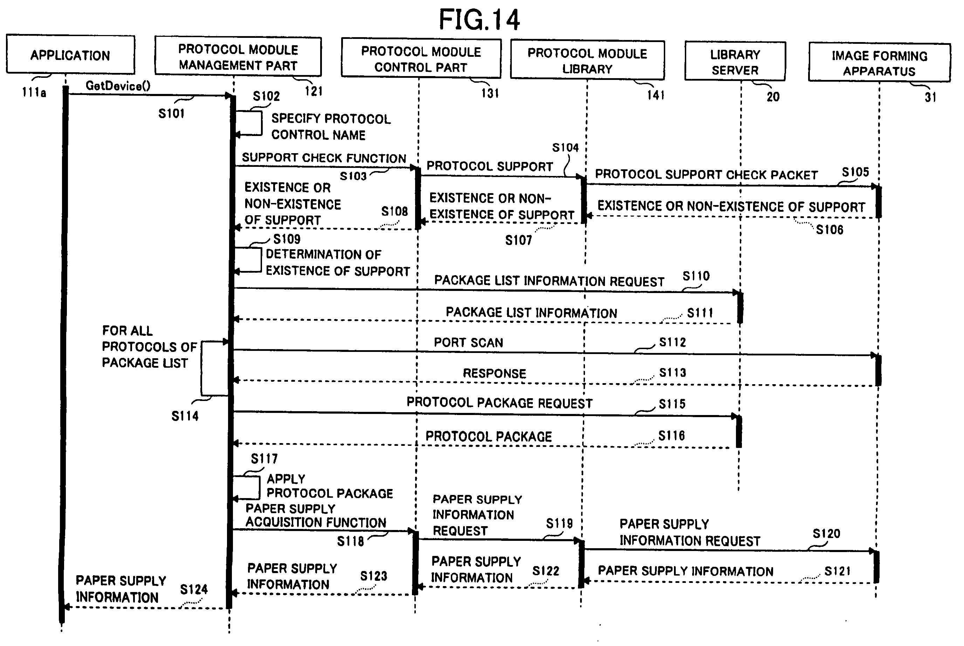

A description will be given below of a process procedure of the equipment management server shown in FIG. 5. FIG. 14 is a sequence chart for explaining an acquisition process of acquiring the equipment information from the image forming apparatus performed by the equipment management server.

In step S101, the application 111a calls the "GetDevice" function of the protocol module management part 121 in response to a request from the client application 41 so as to acquire the equipment information. Here, it is supposed that the "paper supply information" of the image forming apparatus 31 is requested.

Subsequent to step S101, the protocol module management part 121 requests each protocol module control part 131 registered in the protocol module management table 122 to check whether or not the image forming apparatus 31 is supporting each protocol. That is, the protocol module management part 121 specifies the protocol module control part name (DLL name) of each protocol module control part 131 by referring to the protocol module management table 122, and also specifies a name of a function (hereinafter, referred to as "support check function") for checking a support of the protocol in each protocol module control part 131 by referring to the protocol control function name list file 123 (S102). Then, the protocol module management part 121 call the support check function of each protocol module control part 131 according to the procedure explained with reference to FIG. 10 (S103).

For example, if the protocol control function name list file 123 is defined as shown in FIG. 9, the function name of the support check function can be specified as "GetSupportProtocol". It should be noted that the call of the support check function of each protocol module control part 131 is performed in parallel as separate threads.

Subsequent to step S103, the sequence proceeds to step S104 where each protocol module control part 131 requests the protocol module library 141 to check support of the protocol, respectively. If the protocol module library 141 sends a packet for checking support of the protocol to the image forming apparatus 31, information regarding existence or non-existence of the support is returned from the image forming apparatus 31 as a response to the packet concerned (S106). A notification regarding existence or non-existence of the support is sent from the protocol module control part 131 to the protocol module management part 121 through the protocol module library 141 as return information of the support check function (S107, S108). If the notification of existence or non-existence of the support is sent to all the protocol module control parts 131 that has called in the separate threads, the sequence proceeds to step S109 where the protocol module management part 121 determines whether or not there is a protocol currently supported by the image forming apparatus 31 among the protocols currently supported by the equipment management server 10.

Here, if there is a protocol control part 131, which returned information indicating the support, the protocol management means 121 acquires the equipment information (paper supply information) from the image forming apparatus 31 by the process of step S118 and the subsequent steps mentioned later by using the protocol control part 131 concerned.

On the other hand, if all the protocol module control parts 131 returns information indicating no support, that is, if it is impossible to acquire the equipment information from the image forming apparatus 31 at the present condition, the sequence proceeds to step S110 where the protocol module management part 121 requests the library server 20 to send information (hereinafter, referred to as "package list information") which is managed by the package list table 21 (refer to FIG. 13).

Subsequent to step S110, the sequence proceeds to step S111 where the library server 20 returns the package list information in response to the request from the protocol module management part 121.

Subsequent to step S111, the protocol module management part 121 performs a port scan based on a port number of each protocol contained in the package list information and detects a port which is open in the image forming apparatus so as to determine the protocol which the image formation apparatus 31 supports (S112, S113, S114). Accordingly, the port scan is not applied to all ports but only the port which is actually usable so as to attempt an improvement in the processing efficiency.

If the protocol which the image forming apparatus 31 is supporting (hereinafter, referred to as "support protocol") is discriminated, the sequence proceeds to step S115 where the protocol module management part 121 specifies the package name of the protocol module package (hereinafter, referred to as "support package") corresponding to the support protocol based on the package list information, and requests the library server 20 to provide the support package so as to acquire the support package from the library server 20 (S116).

Subsequent to step S116, the sequence proceeds to step S117 where the protocol module management part 121 applies the support package to the equipment management server 10. Specifically, the support package is decompressed, and the protocol module control part 131, the protocol module library 141, the protocol control function name list file 123 and the access procedure information 132 included in the support package are stored in a predetermined folder. The predetermined folder is a folder in which each file contained in the support package should be stored at the time of execution of the process by the equipment management server 10. Therefore, each file is stored in the predetermined folder and is usable during the process execution. Further, the information regarding the protocol module control part 131 contained in the support package is added to the protocol module management table 122.

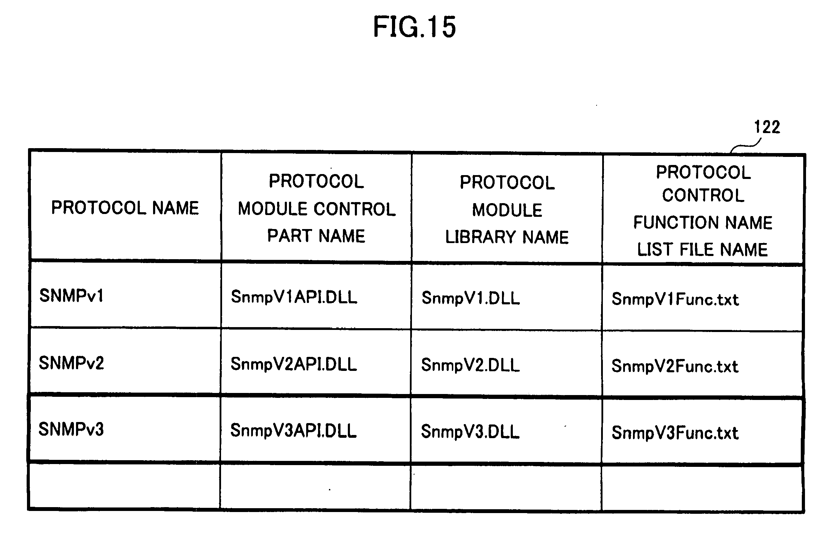

FIG. 15 is an illustration for explaining contents of the updated protocol module management table. FIG. 15 indicates an example of a case where a protocol module package with respect to SNMPv3 is newly applied. The record of the third row corresponds to the newly added protocol module package.

Subsequent to step S117, the sequence proceeds to step S118 where the protocol module management means 121 requests the protocol module control part 131 to acquire the paper supply information by calling a function (hereinafter, referred to as "paper supply information acquisition function") for acquiring the paper supply information, the paper supply information acquisition function being mounted in the newly applied protocol module control part 131.

Specifically, the protocol module management part 121 specifies the protocol module control part name (DLL name) of the newly added protocol module control part 131 and the protocol control function list file name by referring to the updated protocol module management table 122 (FIG. 15), and further specifies the function name of the paper supply information acquisition function by acquiring the function name ("GetIntrayInfo" in FIG. 9) corresponding to the paper supply category from the protocol control function list file 123 specified by the protocol control function list file name concerned.

Then, the protocol module management part 121 performs the process explained with reference to FIG. 10 based on the specified protocol module control part name and the function name of the paper supply information acquisition function so as to call the paper supply information acquisition function.

Subsequent to step S118, the sequence proceeds to step S119 where the protocol module control part 131 requests the protocol module library 141 to provide the paper supply information in accordance with the access procedure information 132.

Subsequent to step S119, the protocol module library 141 acquires the paper supply information from the image forming apparatus 31 by communicating with the image forming apparatus 31 according to the corresponding protocol (SNMPv3 in this case) (S131). The acquired paper supply information is returned to the application 111a as return information of the "GetDevice" function (S124) through the protocol module control part 131 and the protocol module management part 121 (S122, S123) .

As mentioned above, according to the equipment management server 10 according to the present embodiment, the protocol module management part 121 discriminates the protocol which the equipment is supporting, and acquires the protocol module package corresponding to the protocol concerned from the library server 20. Here, the protocol module management part 121 can change the protocol module control part 131 to be called by changing the protocol module management table 122. Therefore, even if there is a case where the equipment management server 10 does not correspond to the protocol which is supported by the equipment to communicate with, a necessary module can be acquired and made available by a simple process without need of a correction of the source code of the protocol module management part 121.

Since information regarding the protocol once made available is registered in the protocol module management part 121, there is no need to repeat the same process such as acquiring when it is required to perform communications according the protocol concerned.

Additionally, the protocol module management part 121 is capable of receiving a request from each application according to the common interface ("GetDevice2 function) irrespective of kinds of protocols. Therefore, there is no need to correct a source code in response to a new protocol in each application.

It should be noted that although the library server 20 is used as a server exclusive for management of the protocol module package in the present embodiment, the protocol module package may be managed by each equipment. In such a case, the equipment management server 10 may acquire the protocol module package corresponding to an equipment, which the equipment management server 10 communicates with, according to a file transfer protocol (FTP) or the like.

In the meantime, in recent years, there is provided a specific function equipment which can perform information processing the same as a computer such as one which can serve as a Web server. For example, one of such equipments is an image forming apparatus referred to as a combination machine or a multi-function machine, which has a plurality of applications for performing specific processes in multiple services such as a printer, a copy and a facsimile.

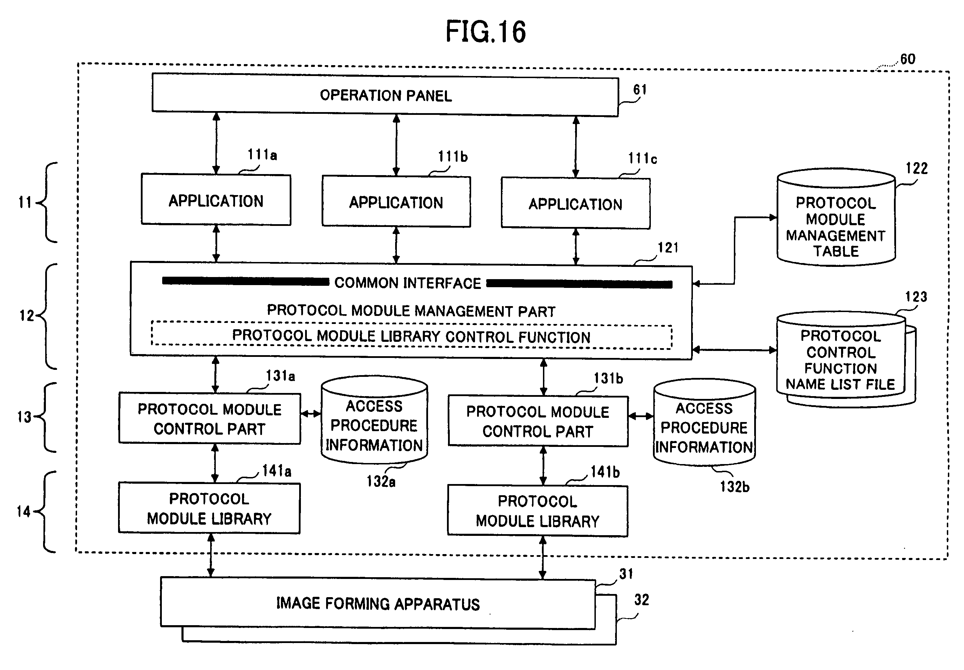

Therefore, the effects of the present invention can be obtained by constituting the equipment management server 10 according to the present invention using such an image forming apparatus. FIG. 16 is a block diagram of an equipment management system using an image forming apparatus as an equipment management server. In FIG. 16, parts that are the same as the parts shown in FIG. 5 are given the same reference numerals, and descriptions thereof will be omitted. In FIG. 16, an operation panel 61 is, for example, a liquid crystal panel which provides to a user an operating means for operating various applications 111a, 111b and 111c in the image forming apparatus 60. In the equipment management system shown in FIG. 16, the image forming apparatus 60 serves as a constituent element instead of the equipment management server 10.
A function the same as the function mounted in the equipment management server 10 is mounted in the image forming apparatus 60. Therefore, the image forming apparatus 60 can respond to a protocol required for communication with other image forming apparatuses such as the image forming apparatus 31 automatically, and can display the equipment information regarding other image forming apparatuses on the operation panel 61 by communication according to the protocol concerned.

The present invention is not limited to the specifically disclosed embodiments, and variations and modifications may be made without departing from the scope of the present invention.

## Claims

1. A communication apparatus (10) configured and arranged to be connected to a network (50) to which a plurality of image forming equipment (31, 32) and a client terminal (40) are connected, comprising:
a communication management part (121) adapted to determine whether or not one or more of said equipment (31, 32) is arranged to communicate according to a protocol supported by said communication apparatus (10), and when said equipment (31, 32) Is determined to be arranged to be incapable of communicating with said communication apparatus according to the protocol supported by said communication apparatus, said communication management part is adapted to acquire a communication procedure for communication with said equipment (31, 32) from an external apparatus (20) connected to said network (50) so that said communication apparatus (10) is able to communicate with said equipment (31, 32) by applying the acquired communication procedure to the communication with said equipment (31, 32);
wherein said communication management part (121) includes an equipment information interface arranged to receive a request of acquiring equipment information from the client terminal and to call a dynamically loadable communication control part (131a,b) based on said received request, wherein information necessary for the communication management part (121) to call the communication control part is defined in a communication management table (122), and wherein the communication control part (131) is called based on said defined information; and wherein the dynamically loadable communication control part (131a, 131b) being capable of accessing a protocol module library (141) specific to a protocol responsive to it being called by the communication management part (121), the protocol module library (141) providing a support package for the specific protocol via the communication management part (121) for the communication apparatus to communicate using said protocol , thereby causing said equipment information interface to be a common interface irrespective of the kinds of communication procedure that are used in response to a call to the equipment information interface by updating the information defined in said communication management table (122) without altering said communication management part(121).

2. A communication apparatus according to Claim 1, wherein said communication management part (121) is arranged to determine a protocol that is supported by said equipment (31, 32) by performing a port scan on said equipment (31, 32).

3. A communication apparatus according to Claim 2, wherein said external apparatus is arranged to manage a plurality of communication procedures corresponding to different protocols, and said communication management part (121) is arranged to acquire list information from said external apparatus (20), the list information indicating a list of said plurality of communication procedures managed by said external apparatus (20), so as to perform the port scan on said equipment (31, 32) in accordance with a port number indicated corresponding to each of said plurality of communication procedures in the list information.

4. A communication apparatus according to any one of Claims 1 to 3, further comprising:
a plurality of communication procedures corresponding to different protocols, respectively; and a communication procedure list management part arranged to manage a list of communication procedure identification information that identifies each of said plurality of communication procedures,
wherein said communication management part is arranged to specify one of said plurality of communication procedures that is used for communication with said equipment based on the communication procedure identification information managed by said communication procedure list management part.

5. A communication apparatus according to Claim 4, wherein said communication management part (121) is arranged to add the communication procedure identification information of said communication procedure acquired from said external apparatus to said communication procedure list management part.

6. A communication apparatus according to any one of Claims 1 to 5, wherein said communication management part (121) is arranged to request said communication procedure to acquire equipment information regarding said equipment (31, 32), and said communication procedure is arranged to acquire the equipment information from said equipment (31, 32) in response to the request.

7. A communication apparatus according to Claim 6, further comprising an equipment information providing part arranged to send the equipment information to a client apparatus connected to said network (50) in response to a request from said client apparatus, wherein said equipment information providing part is arranged to request said communication management part (121) to acquire the equipment information through said equipment information interface.

8. A communication apparatus according to Claim 7, comprising a plurality of said equipment information providing parts, and said communication management part is arranged to be commonly used by said equipment information providing parts in use.

9. A communication apparatus according to any one of Claims 1 to 8, further comprising:
a first module arranged to receive a request of communication from said communication management part (121) by a first interface that is called according to a procedure common to any kinds of protocols; and
a second module arranged to receive a request of communication with said equipment by a second interface that is specific to the protocol corresponding to said communication procedure,
wherein said first module is arranged to request said second module to communicate with said equipment through said second interface in response to the request from said communication management part (121).

10. A communication control method in a communication apparatus (10) configured and arranged to be connected to a network (50) to which a plurality of image forming equipment (31, 32) and a client terminal (40) are connected, said communication control method comprising:
a communication checking step of determining whether or not one or more said equipment (31, 32) is arranged to communicate according to a protocol supported by said communication apparatus (10);
a communication procedure acquiring step of acquiring a communication procedure for communication with said apparatus (31, 32) from an external apparatus (20) connected to said network (50) when said equipment (31, 32) is determined to be incapable of communicating with said communication apparatus (10) according to the protocol supported by said communication apparatus (10); and
a communication step of communicating with said equipment (31, 32) by applying the acquired communication procedure;
wherein said communication step includes receiving a request of acquiring equipment information at a communication management part (121) from the client terminal(40) via an equipment information interface, and calling a dynamically loadable communication control part (131a,b) based on said received request, wherein information necessary for the communication management part (121) to call the communication control part (131) is defined in a communication management table (122), and wherein the communication control part (131) is called based on said defined information; said communication control part (131) capable of accessing a protocol module library (141) specific to a protocol responsive to it being called by the communication management part (121), the protocol module library (141) configured to provide a support package for the specific protocol via the communication management part (121) for the communication apparatus to communicate using said protocol, thereby causing said equipment information interface to be a common interface irrespective of the kinds of communication procedure that are used in response to a call to the equipment information interface by updating the information defined in said communication management table (122) without altering said communication management part.

11. A communication control method according to Claim 10, further comprising a protocol determining step of determining a protocol that is supported by said equipment (31, 32) by performing a port scan on said equipment (31, 32), wherein said communication procedure acquiring step acquires a communication procedure from said external apparatus (20), the communication procedure using the protocol that is determined to be supported by said equipment (31, 32) in said protocol determining step.

12. A communication control method according to Claim 11, wherein said external apparatus (20) manages a plurality of communication procedures corresponding to different protocols, respectively, and said protocol determining step acquires list information from said external apparatus (20), the list information indicating a list of the communication procedures managed by said external apparatus (20), so as to perform the port scan on said equipment (31, 32) in accordance with a port number corresponding to one of said plurality of communication procedures contained in the list information.

13. A communication control method according to any one of Claims 10 to 12, wherein said communication step specifies one of said plurality of communication procedures that is used for communication with said equipment (31, 32) based on list information of communication procedure identification information that identifies each of said communication procedures corresponding to different protocols, respectively.

14. A communication control method as claimed in Claim 13, further comprising an information adding step of adding the communication procedure identification information of said communication procedure acquired from said external apparatus (20) to the list information of said communication procedures.

15. A communication control method according to any one of Claims 10 to 14, wherein said communication step receives said equipment information regarding said equipment (31, 32) from said equipment through said communication procedure.

16. A communication control method according to Claim 15, further comprising an equipment information providing step of sending the equipment information to a client apparatus connected to said network in response to a request from said client apparatus, wherein said equipment information providing step requests said communication step to acquire the equipment information through said equipment information interface.

17. A communication control method as claimed in Claim 16, comprising a plurality of said equipment information providing steps, and said communication step is commonly used by said equipment information providing steps.

18. A communication control method as claimed in one of Claims 10 to 17, wherein said communication step includes:
a first step of calling a first interface that is called according to a procedure common to any kinds of protocols; and
a second step of performing communication with said equipment (31, 32) by calling a second interface that is specific to the protocol corresponding to said communication procedure.

19. A computer readable recording medium storing a program for causing a computer to perform a communication control method in a communication apparatus (10) configured and arranged to be connected to a network (50) to which an equipment (31, 32) is connected, said communication control method **characterized by**:
a communication checking step of determining whether or not said equipment (31, 32) is arranged to communicate according to a protocol supported by said communication apparatus (10);
a communication procedure acquiring step of acquiring a communication procedure for communication with said equipment (31, 32) from an external apparatus (20) connected to said network (50) when said equipment (31, 32) is determined to be incapable of communicating with said communication apparatus (10) according to the protocol supported by said communication apparatus (10); and
a communication step of communicating with said equipment (31, 32) by applying with the acquired communication procedure;
wherein said communication step includes receiving a request of acquiring equipment information at a communication management part (121) from the client terminal(40) via an equipment information interface, and calling a dynamically loadable communication control part (131a,b) based on said received request, wherein information necessary for the communication management part (121) to call the communication control part (131) is defined in a communication management table (122), and wherein the communication control part (131) is called based on said defined information, said communication control part (131); said communication control part (131) capable of accessing a protocol module library (141) specific to a protocol responsive to it being called by the communication management part (121), the protocol module library (141) configured to provide a support package for the specific protocol via the communication management part (121) for the communication apparatus to communicate using said protocol , thereby causing said equipment information interface to be a common interface irrespective of the kinds of communication procedure that are used in response to a call to the equipment information interface, by updating the information defined in said communication management table (122) without altering said communication management part.

20. A program for causing a computer to perform a communication control method in a communication apparatus (10) configured and arranged to be connected to a network (50) to which an equipment (31, 32) is connected, said communication control method **characterized by**:
a communication checking step of determining whether or not said equipment (31, 32) is arranged to communicate according to a protocol supported by said communication apparatus (10);
a communication procedure acquiring step of acquiring a communication procedure for communication with said equipment (31, 32) from an external apparatus (20) connected to said network (50) when said equipment (31, 32) is determined to be incapable of communicating with said communication apparatus (10) according to the protocol supported by said communication apparatus (10): and
a communication step of communicating with said equipment (31, 32) by applying the acquired communication procedure;
wherein said communication step includes receiving a request of acquiring equipment information at a communication management part (121) from the client terminal(40) via an equipment information interface, and calling a dynamically loadable communication control part (131a,b) based on said received request, wherein information necessary for the communication management part (121) to call the communication control part (131) is defined in a communication management table (122), and wherein the communication control part (131) is called based on said defined information: said communication control part (131) ; said communication control part (131) capable of accessing a protocol module library (141) specific to a protocol responsive to it being called by the communication management part (121), the protocol module library (141) configured to provide a support package for the specific protocol via the communication management part (121) for the communication apparatus to communicate using said protocol, thereby causing said equipment information interface to be a common interface irrespective of the kinds of communication procedure that are used in response to a call to the equipment information interface by updating the information defined in said communication management table (122) without altering said communication management part.

## Patentansprüche

1. Kommunikationsvorrichtung (10), die dafür konfiguriert und eingerichtet ist, mit einem Netz (50) verbunden zu werden, mit dem eine Vielzahl von Bilderzeugungsgeräten (31, 32) und ein Client-Endgerät (40) verbunden sind, umfassend:
einen Kommunikationsverwaltungsteil (121), der dafür eingerichtet ist, zu bestimmen, ob ein Gerät (31, 32), oder mehrere, dafür eingerichtet ist, gemäß einem durch die Kommunikationsvorrichtung (10) unterstützten Protokoll zu kommunizieren, oder nicht, und wenn bestimmt wird, dass das Gerät (31, 32) dafür eingerichtet ist, mit der Kommunikationsvorrichtung gemäß dem durch die Kommunikationsvorrichtung unterstützten Protokoll nicht kommunizieren zu können, der Kommunikationsverwaltungsteil dafür eingerichtet ist, eine Kommunikationsprozedur zur Kommunikation mit dem Gerät (31, 32) von einer externen Vorrichtung (20) zu beschaffen, die mit dem Netz (50) verbunden ist, so dass die Kommunikationsvorrichtung (10) mit dem Gerät (31, 32) kommunizieren kann, in dem die beschaffte Kommunikationsprozedur auf die Kommunikation mit dem Gerät (31, 32) angewendet wird,
wobei der Kommunikationsverwaltungsteil (121) eine Geräteinformationsschnittstelle aufweist, die dafür eingerichtet ist, eine Anforderung der Beschaffung von Geräteinformation vom Client-Endgerät zu empfangen und einen dynamisch ladbaren Kommunikationssteuerungsteil (131a, b) auf der Grundlage der empfangenen Anforderung aufzurufen, wobei Information, die für den Kommunikationsverwaltungsteil (121) notwendig ist, um den Informationssteuerungsteil aufzurufen, in einer Kommunikationsverwaltungstabelle (122) definiert ist und wobei der Kommunikationssteuerungsteil (131) auf der Grundlage der definierten Information aufgerufen wird und wobei der dynamisch ladbare Kommunikationssteuerungsteil (131a, 131b) auf eine Protokollmodulbibliothek (141) zugreifen kann, die für ein Protokoll spezifisch ist, das darauf reagiert, dass es durch den Kommunikationsverwaltungsteil (121) aufgerufen wird, wobei die Protokollmodulbibliothek (141) ein Unterstützungspaket für das spezifische Protokoll über den Kommunikationsverwaltungsteil (121) bereitstellt, damit die Kommunikationsvorrichtung unter Verwendung des Protokolls kommunizieren kann, wodurch bewirkt wird, dass die Geräteinformationsschnittstelle eine gemeinsame Schnittstelle wird, unabhängig von den Arten der Kommunikationsprozedur, die als Antwort auf einen Aufruf an die Geräteinformationsschnittstelle verwendet werden, indem die in der Kommunikationsverwaltungstabelle (122) definierte Information aktualisiert wird, ohne den Kommunikationsverwaltungsteil (121) zu ändern.

2. Kommunikationsvorrichtung nach Anspruch 1, wobei der Kommunikationsverwaltungsteil (121) dafür eingerichtet ist, ein Protokoll zu bestimmen, das durch das Gerät (31, 32) unterstützt wird, indem eine Portabfrage an dem Gerät (31, 32) durchgeführt wird.

3. Kommunikationsvorrichtung nach Anspruch 2, wobei die externe Vorrichtung dafür eingerichtet ist, eine Vielzahl von Kommunikationsprozeduren entsprechend den unterschiedlichen Protokollen zu verwalten, und der Kommunikationsverwaltungsteil (121) dafür eingerichtet ist, Listeninformation von der externen Vorrichtung (20) zu beschaffen, wobei die Listeninformation eine Liste der Vielzahl von Kommunikationsprozeduren angibt, die durch die externe Vorrichtung (20) verwaltet wird, um die Portabfrage an dem Gerät (31, 32) gemäß einer Portnummer durchzuführen, die entsprechend jeder aus der Vielzahl von Kommunikationsprozeduren in der Listeninformation angegeben ist.

4. Kommunikationsvorrichtung nach einem der Ansprüche 1 bis 3, ferner umfassend:
eine Vielzahl von Kommunikationsprozeduren, die unterschiedlichen Protokollen entsprechen; und einen Kommunikationsprozedurlistenverwaltungsteil, der dafür eingerichtet ist, eine Kommunikationsprozeduridentifikationsinformationsliste zu verwalten, die jede aus der Vielzahl von Kommunikationsprozeduren identifiziert,
wobei der Kommunikationsverwaltungsteil dafür eingerichtet ist, eine aus der Vielzahl von Kommunikationsprozeduren anzugeben, die für die Kommunikation mit dem Gerät verwendet wird, auf der Grundlage der Kommunikationsprozeduridentifikationsinformation, die durch den Kommunikationsprozedurenlistenverwaltungsteil verwaltet wird.

5. Kommunikationsvorrichtung nach Anspruch 4, wobei der Kommunikationsverwaltungsteil (121) dafür eingerichtet ist, die Kommunikationsprozeduridentifikationsinformation der von der externen Vorrichtung beschafften Kommunikationsprozedur dem Kommunikationsprozedurenlistenverwaltungsteil hinzuzufügen.

6. Kommunikationsvorrichtung nach einem der Ansprüche 1 bis 5, wobei der Kommunikationsverwaltungsteil (121) dafür eingerichtet ist, die Kommunikationsprozedur anzufordern, um Geräteinformation bezüglich des Gerätes (31, 32) zu beschaffen, und die Kommunikationsprozedur dafür eingerichtet ist, die Geräteinformation von dem Gerät (31, 32) als Antwort auf die Anforderung zu beschaffen.

7. Kommunikationsvorrichtung nach Anspruch 6, ferner umfassend einen Geräteinformationsbereitstellungsteil, der dafür eingerichtet ist, die Geräteinformation an eine mit dem Netz (50) verbundene Client-Vorrichtung als Antwort auf eine Anforderung von der Client-Vorrichtung zu senden, wobei der Geräteinformationsbereitstellungsteil dafür eingerichtet ist, den Kommunikationsverwaltungsteil (121) aufzufordern, die Geräteinformation über die Geräteinformationsschnittstelle zu beschaffen.

8. Kommunikationsvorrichtung nach Anspruch 7, umfassend eine Vielzahl der Geräteinformationsbereitstellungsteile, und wobei der Kommunikationsverwaltungsteil dafür eingerichtet ist, durch die in Verwendung befindlichen Geräteinformationsbereitstellungsteile gemeinsam verwendet zu werden.

9. Kommunikationsvorrichtung nach einem der Ansprüche 1 bis 8, ferner umfassend:
ein erstes Modul, das dafür eingerichtet ist, eine Anforderung einer Kommunikation von dem Kommunikationsverwaltungsteil (121) durch eine erste Schnittstelle zu empfangen, die gemäß einer Prozedur aufgerufen wird, die allen Arten von Protokolle gemeinsam ist; und
ein zweites Modul, das dafür eingerichtet ist, eine Anforderung einer Kommunikation mit dem Gerät durch eine zweite Schnittstelle zu empfangen, die für das Protokoll spezifisch ist, das der Kommunikationsprozedur entspricht,
wobei das erste Modul dafür eingerichtet ist, das zweite Modul aufzufordern, mit dem Gerät über die zweite Schnittstelle zu kommunizieren, als Antwort auf die Anforderung von dem Kommunikationsverwaltungsteil (121).

10. Kommunikationssteuerungsverfahren in einer Kommunikationsvorrichtung (10), die dafür konfiguriert und eingerichtet ist, mit einem Netz (50), mit dem eine Vielzahl von Bilderzeugungsgeräten (31, 32) und ein Client-Endgerät (40) verbunden sind, verbunden zu werden, wobei das Kommunikationssteuerungsverfahren umfasst:
einen Kommunikationsüberprüfungsschritt zum Bestimmen, ob eines oder mehrere der Geräte (31, 32) dafür eingerichtet sind oder nicht, gemäß einem durch die Kommunikationsvorrichtung (10) unterstützten Protokoll zu kommunizieren;
einen Kommunikationsprozedurbeschaffungsschritt zur Beschaffung einer Kommunikationsprozedur für die Kommunikation mit dem Gerät (31, 32) von einer externen Vorrichtung (20), die mit dem Netz (50) verbunden ist, wenn bestimmt ist, dass das Gerät (31, 32) mit der Kommunikationsvorrichtung (10) gemäß dem durch die Kommunikationsvorrichtung (10) unterstützten Protokoll nicht kommunizieren kann; und
einen Kommunikationsschritt zum Kommunizieren mit dem Gerät (31, 32), indem die beschaffte Kommunikationsprozedur angewendet wird;
wobei der Kommunikationsschritt umfasst: Empfangen einer Anforderung der Beschaffung von Geräteinformation in einem Kommunikationsverwaltungsteil (121) von dem Client-Endgerät (40) über eine Geräteinformationsschnittstelle und Aufrufen eines dynamisch ladbaren Kommunikationssteuerungsteils (131a, b) auf der Grundlage der empfangenen Anforderung, wobei die Information, die für den Kommunikationsverwaltungsteil (121) notwendig ist, um den Informationssteuerungsteil (131) aufzurufen, in einer Kommunikationsverwaltungstabelle (122) definiert ist und wobei der Kommunikationssteuerungsteil (131) auf der Grundlage der definierten Information aufgerufen wird, wobei der Kommunikationssteuerungsteil (131) auf eine Protokollmodulbibliothek (141) zugreifen kann, die für ein Protokoll spezifisch ist, das darauf reagiert, dass es durch den Kommunikationsverwaltungsteil (121) aufgerufen wird, wobei die Protokollmodulbibliothek (141) dafür konfiguriert ist, ein Unterstützungspaket für das spezifische Protokoll über den Kommunikationsverwaltungsteil (121) bereitzustellen, damit die Kommunikationsvorrichtung unter Verwendung des Protokolls kommunizieren kann, wodurch bewirkt wird, dass die Geräteinformationsschnittstelle eine gemeinsame Schnittstelle wird, unabhängig von den Arten der Kommunikationsprozedur, die als Antwort auf einen Aufruf an die Geräteinformationsschnittstelle verwendet werden, indem die in der Kommunikationsverwaltungstabelle (122) definierte Information aktualisiert wird, ohne den Kommunikationsverwaltungsteil zu ändern.

11. Kommunikationssteuerungsverfahren nach Anspruch 10, ferner umfassend einen Protokollbestimmungsschritt zum Bestimmen eines Protokolls, das durch das Gerät (31, 32) unterstützt wird, indem eine Portabfrage an dem Gerät (31, 32) durchgeführt wird, wobei der Kommunikationsprozedurbeschaffungsschritt eine Kommunikationsprozedur von der externen Vorrichtung (20) beschafft, wobei die Kommunikationsprozedur das Protokoll verwendet, das in dem Protokollbestimmungsschritt dafür bestimmt wird, durch das Gerät (31, 32) unterstützt zu werden.

12. Kommunikationssteuerungsverfahren nach Anspruch 11, wobei die externe Vorrichtung (20) eine Vielzahl von Kommunikationsprozeduren verwaltet, die jeweils unterschiedlichen Protokollen entsprechen, und der Protokollbestimmungsschritt Listeninformation von der externen Vorrichtung (20) beschafft, wobei die Listeninformation eine Liste der Kommunikationsprozeduren angibt, die durch die externe Vorrichtung (20) verwaltet werden, um die Portabfrage an dem Gerät (31, 32) nach einer Portnummer durchzuführen, die einer aus der Vielzahl von in der Listeninformation enthaltenen Kommunikationsprozeduren entspricht.

13. Kommunikationssteuerungsverfahren nach einem der Ansprüche 10 bis 12, wobei der Kommunikationsschritt eine aus der Vielzahl von Kommunikationsprozeduren angibt, die für die Kommunikation mit dem Gerät (31, 32) verwendet wird auf der Grundlage der Listeninformation der Kommunikationsprozeduridentifikationsinformation, die jede der Kommunikationsprozeduren identifiziert, die jeweils unterschiedlichen Protokollen entsprechen.

14. Kommunikationssteuerungsverfahren nach Anspruch 13, ferner umfassend einen Informationshinzufügungsschritt zum Hinzufügen der Kommunikationsprozeduridentifikationsinformation der von der externen Vorrichtung (20) beschafften Kommunikationsprozedur zu der Listeninformation der Kommunikationsprozeduren.

15. Kommunikationssteuerungsverfahren nach einem der Ansprüche 10 bis 14, wobei der Kommunikationsschritt die Geräteinformation in Bezug auf das Gerät (31, 32) von dem Gerät durch die Kommunikationsprozedur empfängt.

16. Kommunikationssteuerungsverfahren nach Anspruch 15, ferner umfassend einen Geräteinformationsbereitstellungsschritt zum Senden der Geräteinformation an eine mit dem Netz verbundene Client-Vorrichtung als Antwort auf eine Anforderung von der Client-Vorrichtung, wobei der Geräteinformationsbereitstellungsschritt den Kommunikationsschritt anfordert, um die Geräteinformation über die Geräteinformationsschnittstelle zu beschaffen.

17. Kommunikationssteuerungsverfahren nach Anspruch 16, umfassend eine Vielzahl der Geräteinformationsbereitstellungsschritte, und wobei der Kommunikationsschritt durch die Geräteinformationsbereitstellungsschritte gemeinsam verwendet wird.

18. Kommunikationssteuerungsverfahren nach einem der Ansprüche 10 bis 17, wobei der Kommunikationsschritt umfasst:
einen ersten Schritt zum Aufrufen einer ersten Schnittstelle, die gemäß einer Prozedur aufgerufen wird, die allen Arten von Protokollen gemeinsam ist; und
einen zweiten Schritt zum Durchführen von Kommunikation mit dem Gerät (31, 32), indem eine zweite Schnittstelle aufgerufen wird, die für das Protokoll spezifisch ist, das der Kommunikationsprozedur entspricht.

19. Computerlesbares Aufzeichnungsmedium, das ein Programm speichert, das bewirkt, dass ein Computer ein Kommunikationssteuerungsverfahren in einer Kommunikationsvorrichtung (10) durchführt, die dafür konfiguriert und eingerichtet ist, mit einem Netz (50) verbunden zu werden, mit dem ein Gerät (31, 32) verbunden ist, wobei das Kommunikationssteuerungsverfahren **gekennzeichnet ist durch**:
einen Kommunikationsüberprüfungsschritt zum Bestimmen, ob das Gerät (31, 32) dafür eingerichtet ist oder nicht, gemäß einem **durch** die Kommunikationsvorrichtung (10) unterstützten Protokoll zu kommunizieren;
einen Kommunikationsprozedurbeschaffungsschritt zur Beschaffung einer Kommunikationsprozedur für die Kommunikation mit dem Gerät (31, 32) von einer mit dem Netz (50) verbundenen externen Vorrichtung (20), wenn bestimmt wird, dass das Gerät (31, 32) mit der Kommunikationsvorrichtung (10) gemäß dem **durch** die Kommunikationsvorrichtung (10) unterstützten Protokoll nicht kommunizieren kann; und
einen Kommunikationsschritt zum Kommunizieren mit dem Gerät (31, 32), indem die beschaffte Kommunikationsprozedur angewendet wird;
wobei der Kommunikationsschritt umfasst: Empfangen einer Anforderung der Beschaffung von Geräteinformation in einem Kommunikationsverwaltungsteil (121) von dem Client-Endgerät (40) über eine Geräteinformationsschnittstelle und Aufrufen eines dynamisch ladbaren Kommunikationssteuerungsteils (131a, b) auf der Grundlage der empfangenen Anforderung, wobei die Information, die für den Kommunikationsverwaltungsteil (121) notwendig ist, um den Kommunikationssteuerungsteil (131) aufzurufen, in einer Kommunikationsverwaltungstabelle (122) definiert ist und wobei der Kommunikationssteuerungsteil (131) auf der Grundlage der definierten Information aufgerufen wird, wobei der Kommunikationssteuerungsteil (131) auf eine Protokollmodulbibliothek (141) zugreifen kann, die für ein Protokoll spezifisch ist, das darauf reagiert, dass es **durch** den Kommunikationsverwaltungsteil (121) aufgerufen wird, wobei die Protokollmodulbibliothek (141) dafür konfiguriert ist, ein Unterstützungspaket für das spezifische Protokoll über den Kommunikationsverwaltungsteil (121) bereitzustellen, damit die Kommunikationsvorrichtung unter Verwendung des Protokolls kommunizieren kann, wodurch bewirkt wird, dass die Geräteinformationsschnittstelle eine gemeinsame Schnittstelle wird, unabhängig von den Arten der Kommunikationsprozedur, die als Antwort auf einen Aufruf an die Geräteinformationsschnittstelle verwendet werden, indem die in der Kommunikationsverwaltungstabelle (122) definierte Information aktualisiert wird, ohne den Kommunikationsverwaltungsteil zu ändern.

20. Programm, das bewirkt, dass ein Computer ein Kommunikationssteuerungsverfahren in einer Kommunikationsvorrichtung (10) durchführt, die dafür konfiguriert und eingerichtet ist, mit einem Netz (50) verbunden zu werden, mit dem ein Gerät (31, 32) verbunden ist, wobei das Kommunikationssteuerungsverfahren **gekennzeichnet durch**:
einen Kommunikationsüberprüfungsschritt zum Bestimmen, ob das Gerät (31, 32) dafür eingerichtet ist oder nicht, gemäß einem **durch** die Kommunikationsvorrichtung (10) unterstützten Protokoll zu kommunizieren;
einen Kommunikationsprozedurbeschaffungsschritt zum Beschaffen einer Kommunikationsprozedur für die Kommunikation mit dem Gerät (31, 32) von einer externen Vorrichtung (20), die mit dem Netz (50) verbunden ist, wenn bestimmt wird, dass das Gerät (31, 32) mit der Kommunikationsvorrichtung (10) gemäß dem **durch** die Kommunikationsvorrichtung (10) unterstützten Protokoll nicht kommunizieren kann; und
einen Kommunikationsschritt zum Kommunizieren mit dem Gerät (31, 32) unter Anwendung der beschafften Kommunikationsprozedur;
wobei der Kommunikationsschritt umfasst: Empfangen einer Anforderung der Beschaffung von Geräteinformation in einem Kommunikationsverwaltungsteil (121) von dem Client-Endgerät (40) über eine Informationsschnittstelle und Aufrufen eines dynamisch ladbaren Kommunikationssteuerungsteils (131a, b) auf der Grundlage der empfangenen Anforderung, wobei die Information, die für das Kommunikationsverwaltungsteil (121) notwendig ist, um das Kommunikationssteuerungsteil (131) aufzurufen, in einer Kommunikationsverwaltungstabelle (122) definiert ist und wobei der Kommunikationssteuerungsteil (131) auf der Grundlage der definierten Information aufgerufen wird, wobei das Kommunikationssteuerungsteil (131) auf eine Protokollmodulbibliothek (141) zugreifen kann, die für ein Protokoll spezifisch ist, das darauf reagiert, dass es **durch** den Kommunikationsverwaltungsteil (121) aufgerufen wird, wobei die Protokollmodulbibliothek (141) dafür konfiguriert ist, ein Unterstützungspaket für das spezifische Protokoll über den Kommunikationsverwaltungsteil (121) bereitzustellen, damit die Kommunikationsvorrichtung unter Verwendung des Protokolls kommunizieren kann, wodurch bewirkt wird, dass die Geräteinformationsschnittstelle eine gemeinsame Schnittstelle wird, unabhängig von den Arten der Kommunikationsprozedur, die als Antwort auf einen Aufruf an die Geräteinformationsschnittstelle verwendet werden, indem die in der Kommunikationsverwaltungstabelle (122) definierte Information aktualisiert wird, ohne den Kommunikationsverwaltungsteil zu ändern.

## Revendications

1. Appareil de communication (10) configuré et conçu pour être connecté à un réseau (50) auquel sont connectés une pluralité d'équipements de formation d'images (31, 32) et un terminal client (40), comprenant :
une partie gestion des communications (121) apte à déterminer si un ou plusieurs desdits équipements (31, 32) est ou non conçu pour communiquer selon un protocole pris en charge par ledit appareil de communication (10), et lorsque ledit équipement (31, 32) est déterminé comme étant conçu pour être incapable de communiquer avec ledit appareil de communication selon le protocole pris en charge par ledit appareil de communication, ladite partie gestion des communications est apte à acquérir une procédure de communication permettant de communiquer avec ledit équipement (31, 32) auprès d'un appareil externe (20) connecté audit réseau (50) afin que ledit appareil de communication (10) puisse communiquer avec ledit équipement (31, 32) en appliquant la procédure de communication acquise aux communications avec ledit équipement (31, 32) ;
dans lequel ladite partie gestion des communications (121) comprend une interface d'informations sur les équipements conçue pour recevoir une demande d'acquisition d'informations sur les équipements émanant du terminal client et pour appeler une partie contrôle des communications à chargement dynamique (131a, b) sur la base de ladite demande reçue, dans lequel les informations nécessaires à la partie gestion des communications (121) pour appeler la partie contrôle des communications sont définies dans une table de gestion des communications (122), et dans lequel la partie contrôle des communications (131) est appelée sur la base desdites informations définies ; et dans lequel la partie contrôle des communications à chargement dynamique (131a, 131b) peut accéder à une bibliothèque de modules de protocoles (141) spécifique à un protocole qui réagit lorsqu'il est appelé par la partie gestion des communications (121), la bibliothèque de modules de protocoles (141) fournissant un ensemble de prise en charge pour le protocole spécifique via la partie gestion des communications (121) permettant à l'appareil de communication de communiquer au moyen dudit protocole, faisant ainsi de ladite interface d'informations sur les équipements une interface commune indépendamment des types de procédure de communication qui sont utilisés en réponse à un appel à l'interface d'informations sur les équipements par mise à jour des informations définies dans ladite table de gestion des communications (122) sans altération de ladite partie gestion des communications (121).

2. Appareil de communication selon la revendication 1, dans lequel ladite partie gestion des communications (121) est conçue pour déterminer un protocole qui est pris en charge par ledit équipement (31, 32) en effectuant un balayage de ports sur ledit équipement (31, 32).

3. Appareil de communication selon la revendication 2, dans lequel ledit appareil externe est conçu pour gérer une pluralité de procédures de communication correspondant à différents protocoles, et ladite partie gestion des communications (121) est conçue pour acquérir des informations de type liste auprès dudit appareil externe (20), les informations de type liste indiquant une liste de ladite pluralité de procédures de communication gérées par ledit appareil externe (20), de manière à effectuer le balayage de ports sur ledit équipement (31, 32) en fonction d'un numéro de port indiqué correspondant à chacune de ladite pluralité de procédures de communication dans les informations de type liste.

4. Appareil de communication selon l'une quelconque des revendications 1 à 3, comprenant en outre :
une pluralité de procédures de communication correspondant à différents protocoles, respectivement ; et une partie gestion de liste de procédures de communication conçue pour gérer une liste d'informations d'identification de procédure de communication qui identifie chacune de ladite pluralité de procédures de communication,
dans lequel ladite partie gestion des communications est conçue pour spécifier une de ladite pluralité de procédures de communication qui est utilisée pour la communication avec ledit équipement sur la base des informations d'identification de procédure de communication gérées par ladite partie gestion de liste de procédures de communication.

5. Appareil de communication selon la revendication 4, dans lequel ladite partie gestion des communications (121) est conçue pour ajouter les informations d'identification de procédure de communication de ladite procédure de communication acquise auprès dudit appareil externe à ladite partie gestion de liste de procédures de communication.

6. Appareil de communication selon l'une quelconque des revendications 1 à 5, dans lequel ladite partie gestion des communications (121) est conçue pour demander ladite procédure de communication pour acquérir des informations sur les équipements concernant ledit équipement (31, 32), et ladite procédure de communication est conçue pour acquérir les informations sur les équipements auprès dudit équipement (31, 32) en réponse à la demande.

7. Appareil de communication selon la revendication 6, comprenant en outre une partie fourniture d'informations sur les équipements conçue pour envoyer les informations sur les équipements à un appareil client connecté audit réseau (50) en réponse à une demande émanant dudit appareil client, dans lequel ladite partie fourniture d'informations sur les équipements est conçue pour demander à ladite partie gestion des communications (121) d'acquérir les informations sur les équipements au travers de ladite interface d'informations sur les équipements.

8. Appareil de communication selon la revendication 7, comprenant une pluralité desdites parties fourniture d'informations sur les équipements, et ladite partie gestion des communications étant conçue pour être utilisée en commun par lesdites parties fourniture d'informations sur les équipements en service.

9. Appareil de communication selon l'une quelconque des revendications 1 à 8, comprenant en outre :
un premier module conçu pour recevoir une demande de communication émanant de ladite partie gestion des communications (121) par une première interface qui est appelée selon une procédure commune à tous types de protocoles ; et
un second module conçu pour recevoir une demande de communication avec ledit équipement par une seconde interface qui est spécifique au protocole correspondant à ladite procédure de communication,
dans lequel ledit premier module est conçu pour demander audit second module de communiquer avec ledit équipement au travers de ladite seconde interface en réponse à la demande émanant de ladite partie gestion des communications (121).

10. Procédé de contrôle des communications dans un appareil de communication (10) configuré et conçu pour être connecté à un réseau (50) auquel sont connectés une pluralité d'équipements de formation d'images (31, 32) et un terminal client (40), ledit procédé de contrôle des communications comprenant :
une étape de vérification des communications qui consiste à déterminer si un ou plusieurs desdits équipements (31, 32) est ou non conçu pour communiquer selon un protocole pris en charge par ledit appareil de communication (10) ;
une étape d'acquisition de procédure de communication qui consiste à acquérir une procédure de communication permettant de communiquer avec ledit équipement (31, 32) auprès d'un appareil externe (20) connecté audit réseau (50) lorsque ledit équipement (31, 32) est déterminé comme étant incapable de communiquer avec ledit appareil de communication (10) selon le protocole pris en charge par ledit appareil de communication (10) ; et
une étape de communication qui consiste à communiquer avec ledit équipement (31, 32) en appliquant la procédure de communication acquise ;
dans lequel ladite étape de communication comprend la réception d'une demande d'acquisition d'informations sur les équipements au niveau d'une partie gestion des communications (121) émanant du terminal client (40) via une interface d'informations sur les équipements, et l'appel d'une partie contrôle des communications à chargement dynamique (131a, b) sur la base de ladite demande reçue, dans lequel les informations nécessaires à la partie gestion des communications (121) pour appeler la partie contrôle des communications (131) sont définies dans une table de gestion des communications (122), et dans lequel la partie contrôle des communications (131) est appelée sur la base desdites informations définies ; ladite partie contrôle des communications (131) pouvant accéder à une bibliothèque de modules de protocoles (141) spécifique à un protocole qui réagit lorsqu'il est appelé par la partie gestion des communications (121), la bibliothèque de modules de protocoles (141) étant configurée pour fournir un ensemble de prise en charge pour le protocole spécifique via la partie gestion des communications (121) permettant à l'appareil de communication de communiquer au moyen dudit protocole, faisant ainsi de ladite interface d'informations sur les équipements une interface commune indépendamment des types de procédure de communication qui sont utilisés en réponse à un appel à l'interface d'informations sur les équipements par mise à jour des informations définies dans ladite table de gestion des communications (122) sans altération de ladite partie gestion des communications.

11. Procédé de contrôle des communications selon la revendication 10, comprenant en outre une étape de détermination de protocole qui consiste à déterminer un protocole qui est pris en charge par ledit équipement (31, 32) en effectuant un balayage de ports sur ledit équipement (31, 32), dans lequel ladite étape d'acquisition de procédure de communication acquiert une procédure de communication auprès dudit appareil externe (20), la procédure de communication utilisant le protocole qui a été déterminé comme étant pris en charge par ledit équipement (31, 32) dans ladite étape de détermination de protocole.

12. Procédé de contrôle des communications selon la revendication 11, dans lequel ledit appareil externe (20) gère une pluralité de procédures de communication correspondant à différents protocoles, respectivement, et ladite étape de détermination de protocole acquiert des informations de type liste auprès dudit appareil externe (20), les informations de type liste indiquant une liste des procédures de communication gérées par ledit appareil externe (20), de manière à effectuer le balayage de ports sur ledit équipement (31, 32) en fonction d'un numéro de port correspondant à une de ladite pluralité de procédures de communication contenues dans les informations de type liste.

13. Procédé de contrôle des communications selon l'une quelconque des revendications 10 à 12, dans lequel ladite étape de communication spécifie une de ladite pluralité de procédures de communication qui est utilisée pour communiquer avec ledit équipement (31, 32) sur la base des informations de type liste des informations d'identification de procédure de communication qui identifient chacune desdites procédures de communication correspondant à différents protocoles, respectivement.

14. Procédé de contrôle des communications selon la revendication 13, comprenant en outre une étape d'ajout d'informations qui consiste à ajouter les informations d'identification de procédure de communication de ladite procédure de communication acquise auprès dudit appareil externe (20) aux informations de type liste desdites procédures de communication.

15. Procédé de contrôle des communications selon l'une quelconque des revendications 10 à 14, dans lequel ladite étape de communication reçoit lesdites informations sur les équipements concernant ledit équipement (31, 32) dudit équipement au travers de ladite procédure de communication.

16. Procédé de contrôle des communications selon la revendication 15, comprenant en outre une étape de fourniture d'informations sur les équipements qui consiste à envoyer les informations sur les équipements à un appareil client connecté audit réseau en réponse à une demande émanant dudit appareil client, dans lequel ladite étape de fourniture d'informations sur les équipements demande ladite étape de communication pour acquérir les informations sur les équipements au travers de ladite interface d'informations sur les équipements.

17. Procédé de contrôle des communications selon la revendication 16, comprenant une pluralité desdites étapes de fourniture d'informations sur les équipements, et ladite étape de communication est utilisée en commun par lesdites étapes de fourniture d'informations sur les équipements.

18. Procédé de contrôle des communications selon l'une des revendications 10 à 17, dans lequel ladite étape de communication comprend :
une première étape qui consiste à appeler une première interface qui est appelée selon une procédure commune à tous types de protocoles ; et
une seconde étape qui consiste à établir une communication avec ledit équipement (31, 32) en appelant une seconde interface qui est spécifique au protocole correspondant à ladite procédure de communication.

19. Support d'enregistrement lisible par ordinateur sauvegardant un programme destiné à faire effectuer par un ordinateur un procédé de contrôle des communications dans un appareil de communication (10) configuré et conçu pour être connecté à un réseau (50) auquel est connecté un équipement (31, 32), ledit procédé de contrôle des communications étant **caractérisé en ce qu'**il comporte :
une étape de vérification des communications qui consiste à déterminer si ledit équipement (31, 32) est ou non conçu pour communiquer selon un protocole pris en charge par ledit appareil de communication (10) ;
une étape d'acquisition de procédure de communication qui consiste à acquérir une procédure de communication permettant de communiquer avec ledit équipement (31, 32) auprès d'un appareil externe (20) connecté audit réseau (50) lorsque ledit équipement (31, 32) est déterminé comme étant incapable de communiquer avec ledit appareil de communication (10) selon le protocole pris en charge par ledit appareil de communication (10) ; et
une étape de communication qui consiste à communiquer avec ledit équipement (31, 32) en appliquant la procédure de communication acquise ;
dans lequel ladite étape de communication comprend la réception d'une demande d'acquisition d'informations sur les équipements au niveau d'une partie gestion des communications (121) émanant du terminal client (40) via une interface d'informations sur les équipements, et l'appel à une partie contrôle des communications à chargement dynamique (131a, b) sur la base de ladite demande reçue, dans lequel les informations nécessaires à la partie gestion des communications (121) pour appeler la partie contrôle des communications (131) sont définies dans une table de gestion des communications (122), et dans lequel la partie contrôle des communications (131) est appelée sur la base desdites informations définies ; ladite partie contrôle des communications (131) pouvant accéder à une bibliothèque de modules de protocoles (141) spécifique à un protocole qui réagit lorsqu'il est appelé par la partie gestion des communications (121), la bibliothèque de modules de protocoles (141) étant configurée pour fournir un ensemble de prise en charge pour le protocole spécifique via la partie gestion des communications (121) permettant à l'appareil de communication de communiquer au moyen dudit protocole, faisant ainsi de ladite interface d'informations sur les équipements une interface commune indépendamment des types de procédure de communication qui sont utilisés en réponse à un appel à l'interface d'informations sur les équipements, par mise à jour des informations définies dans ladite table de gestion des communications (122) sans altération de ladite partie gestion des communications.

20. Programme destiné à faire effectuer par un ordinateur un procédé de contrôle des communications dans un appareil de communication (10) configuré et conçu pour être connecté à un réseau (50) auquel est connecté un équipement (31, 32), ledit procédé de contrôle des communications étant **caractérisé en ce qu'**il comporte :
une étape de vérification des communications qui consiste à déterminer si ledit équipement (31, 32) est ou non conçu pour communiquer selon un protocole pris en charge par ledit appareil de communication (10) ;
une étape d'acquisition de procédure de communication qui consiste à acquérir une procédure de communication permettant de communiquer avec ledit équipement (31, 32) auprès d'un appareil externe (20) connecté audit réseau (50) lorsque ledit équipement (31, 32) est déterminé comme étant incapable de communiquer avec ledit appareil de communication (10) selon le protocole pris en charge par ledit appareil de communication (10) ; et
une étape de communication qui consiste à communiquer avec ledit équipement (31, 32) en appliquant la procédure de communication acquise ;
dans lequel ladite étape de communication comprend la réception d'une demande d'acquisition d'informations sur les équipements au niveau d'une partie gestion des communications (121) émanant du terminal client (40) via une interface d'informations sur les équipements, et l'appel à une partie contrôle des communications à chargement dynamique (131a, b) sur la base de ladite demande reçue, dans lequel les informations nécessaires à la partie gestion des communications (121) pour appeler la partie contrôle des communications (131) sont définies dans une table de gestion des communications (122), et dans lequel la partie contrôle des communications (131) est appelée sur la base desdites informations définies ; ladite partie contrôle des communications (131) pouvant accéder à une bibliothèque de modules de protocoles (141) spécifique à un protocole qui réagit lorsqu'il est appelé par la partie gestion des communications (121), la bibliothèque de modules de protocoles (141) étant configurée pour fournir un ensemble de prise en charge pour le protocole spécifique via la partie gestion des communications (121) permettant à l'appareil de communication de communiquer au moyen dudit protocole, faisant ainsi de ladite interface d'informations sur les équipements une interface commune indépendamment des types de procédure de communication qui sont utilisés en réponse à un appel à l'interface d'informations sur les équipements par mise à jour des informations définies dans ladite table de gestion des communications (122) sans altération de ladite partie gestion des communications.
